# EUROPÄISCHE PATENTSCHRIFT

(11) **EP 0 865 967 B1**
(45) Veröffentlichungstag und Bekanntmachung des Hinweises auf die Patenterteilung: **18.10.2000**
(21) Anmeldenummer: 98102848.3
(22) Anmeldetag: 19.02.1998
(51) Int. Cl.: B60R 1/06, B60R 1/08

(54) **Rückblickspiegel-Anordnung für Nutzfahrzeuge, insbesondere Omnibusse**
Rear view mirroir assembly for utility vehicles, in particular for an omnibus
Dispositif de miroir rétroviseur pour véhicules utilitaires, notamment pour un omnibus

(30) Priorität: 20.03.1997 DE 19711547
(43) Veröffentlichungstag der Anmeldung: 23.09.1998
(73) Patentinhaber: MEKRA Lang GmbH & Co. KG, 91465 Ergersheim (DE)
(72) Erfinder: Lang, Heinrich, 91465 Ergersheim (DE); Kolb, Alfred, 91613 Marktbergel (DE); Seiboth, Wolfgang, 91438 Bad Windsheim (DE); Popp, Albrecht, 91629 Weihenzell (DE)
(74) Vertreter: Hübner, Gerd, Dipl.-Phys.

(56) Entgegenhaltungen:
- EP-A- 0 522 442
- DE-A- 4 200 744
- DE-A- 4 429 604
- DE-U- 9 414 268

## Beschreibung

Die Erfindung betrifft eine Rückblickspiegel-Anordnung gemäß den im Oberbegriff des Anspruches angegebenen Merkmalen. Für Omnibusse werden vermehrt sehr augenfällige Spiegelkonstruktionen verwendet, bei denen eine am oberen Ende der A-Säule der Bus-Karosserie befestigte, weit nach vom ausladende Spiegelanordnung verwendet wird. In diese ausladenden Konstruktionen - sogenannte "Hörnerspiegel" - sind der Hauptspiegel und weitere Zusatzspiegel zur Überwachung des Einstiegsbereiches und des für den Fahrer nicht einsehbaren Frontbereiches vor dem Bus integriert.

Ein Vertreter solcher "Hörnerspiegel" ist in der DE 44 29 604 A1 offenbart. Hierbei ist das ausladende Gehäuse als selbsttragendes geschäumtes Teil mit einem Schaumkern und einer dieser allseitig umhüllenden Versteifungsschicht gebildet. Zur Anbringung dieses Schaumteils an der Karosserie sind an ihrem karosserieseitigen Ende Verankerungsplatten eingeschäumt, die wiederum mit einem entsprechenden Lagerbock an der Buskarosserie unter Bildung eines Schwenklagers verschraubbar sind.

Problematisch bei diesem bekannten Spiegel ist die Stabilität der Schaumstruktur als solcher, da diese aufgrund der weit ausladenden Dimensionierung der Spiegelanordnung durch die fahrdynamischen Einflüsse hohen Kräften ausgesetzt ist. Dies trifft auch für die Stabilität der Verbindung zwischen der eingeschäumten Verankerungsplatte und dem sie umgebenden Schaummaterial zu. Ferner ist die Schäumung großvolumiger selbsttragender Formteile, wie sie bei dem in der DE 44 29 604 A1 gezeigten Busspiegel verwendet werden, aus formtechnischen Gründen nicht unproblematisch.

Aus Sicherheits- und Designgründen werden jedoch die vorstehend geschilderten "Spiegelhörner" bei Omnibussen favorisiert.

In der DE-U 94 14 268 ist ein Fahrzeugaußenspiegel offenbart, bei dem ein Hauptspiegel mit einem Gehäuse an einem L-förmigen Tragarm befestigt ist. Letzterer ist in ein horizontales rohrförmiges Tragteil und ein nach unten verlaufendes, etwa konisch zulaufendes Halteteil zweigeteilt. Das Halteteil weist auf seiner Außenseite eine "Spionspiegelfläche" auf. Im Halteteil ist eine Drehachse angeordnet, die an ihrem oberen Ende mit dem Tragteil des Haltearms verbunden ist. Die Drehachse ist über eine Halterung an das Halteteil verschraubt.

Davon ausgehend liegt der Erfindung die Aufgabe zugrunde, eine Rückblickspiegel-Anordnung für Nutzfahrzeuge und insbesondere für Omnibusse zu schaffen, deren konstruktives Konzept hinsichtlich Stabilität, Montagefreundlichkeit und Gestaltbarkeit besonders für diese "Spiegelhörner" geeignet ist.

Diese Aufgabe wird durch die im Kennzeichnungsteil des Anspruches 1 angegebenen Merkmale gelöst.

Demnach ist bei einer Rückblickspiegel-Anordnung mit einem an der Karosserie anbringbaren Haltearm mit einer tragenden Rohrstruktur als Kernelement, einem am freien Ende der Rohrstruktur befestigten Hauptspiegel mit eigenem Gehäuse und einer darin gelagerten Spiegelscheibe und einem die Rohrstruktur zwischen ihrem karosserieseitigen Ende und dem Hauptspiegel umgebenden Formteil zur Abdeckung der Rohrstruktur vorgesehen, daß das Formteil ein um die Rohrstruktur geschäumtes Formteil insbesondere aus 2-Komponenten-Hartschaum ist.

In vorteilhafter Weise bringt das um die Rohrstruktur geschäumte Formteil aus z. B. Zwei-Komponenten-Hartschaum nicht nur herstellungs- und montagetechnische Vereinfachungen mit sich, es wird vielmehr auch die Rohrstruktur selbst durch das derart ausgebildete Formteil verstärkt und zusätzlich stabilisiert.

Das die Rohrstruktur umgebende Formteil dient ferner als zu Designzwecken gestaltbare Abdeckung, die gleichzeitig aerodynamische Verbesserungen mit sich bringt.

Gemäß bevorzugter Ausgestaltungen des Erfindungsgegenstandes weist das Formteil mindestens eine Lagerausnehmung zur Aufnahme von einem oder mehreren Zusatzspiegeln auf. Diese Lagerausnehmungen sind sehr einfach bei einem geschäumten Formteil zu realisieren.

Die Zusatzspiegel können gegebenenfalls über einen Verstellmechanismus am Formteil gelagert sein, wobei der Mechanismus - oder der Zusatzspiegel selbst - direkt mit dem Formteil verschraubt sein kann. Auch dies ist wiederum bei einem Formteil aus Schaummaterial besonders einfach. Die Zusatzspiegel können ferner auch elektromotorisch verstellbar, auswechselbar und/oder heizbar sein. Die jeweilige Ausstattung richtet sich beispielsweise nach Kundenwunsch.

Zwar ist das Fonnteil bei einer Herstellung aus Schaummaterial relativ leichtgewichtig, es kann jedoch das Gewicht der Spiegelanordnung noch durch Einlegekeme im Schaummaterial des Formteiles reduziert werden. Auch hierbei kann wiederum eine Stabilisierung der Rohrstruktur erreicht werden, wenn - wie nach einer weiteren vorteilhaften Ausgestaltung vorgesehen ist - die Einlegekerne dicht um die Rohrstreben der Rohrstruktur anliegen.

Weitere vorteilhafte Ausführungsformen des Erfindungsgegenstandes betreffen die Ausbildung der Rohrstruktur, deren Anbindung an die Fahrzeugkarosserie und die Anbringung des gesonderten Hauptspiegels. Näheres hierzu ergibt sich aus der Figurenbeschreibung.

Im übrigen sind weitere Merkmale, Einzelheiten und Vorteile der Erfindung der nachfolgenden Beschreibung entnehmbar, in der Ausführungsbeispiele des Erfindungsgegenstandes anhand der beigefügten Zeichnungen näher erläutert werden. Es zeigen:
- Fig. 1: eine teilweise geschnittene Seitenansicht einer Rückblickspiegel-Anordnung für Omnibusse,
- Fig. 2: einen Schnitt entlang der Linie II-II nach Fig. 1 und
- Fig. 3: eine schematische Seitenansicht einer Rohrstruktur der Rückblickspiegel-Anordnung mit angedeutetem umschäumten Formteil.

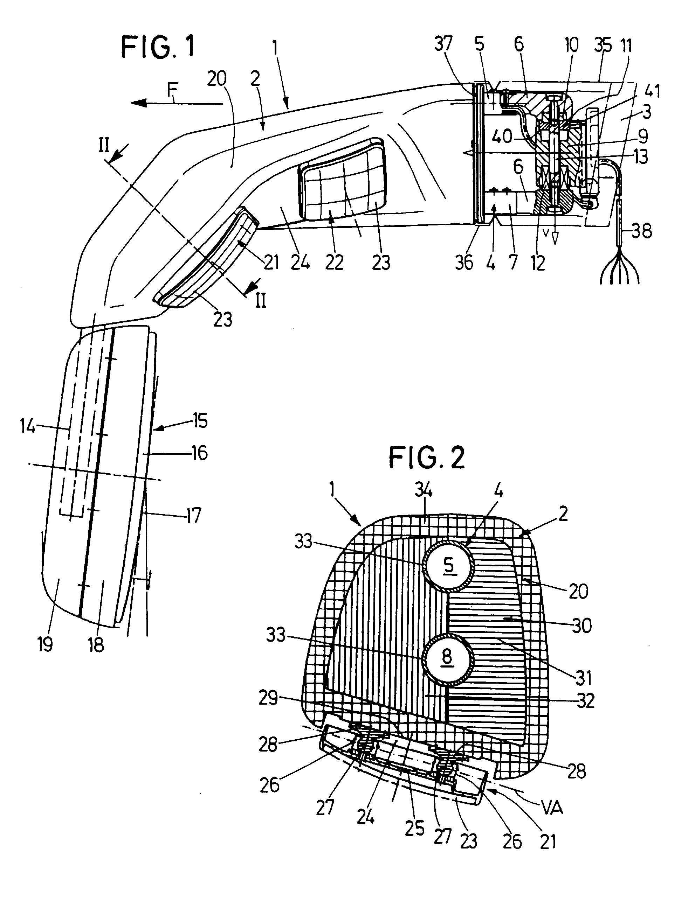

Wie aus Fig. 1 und 2 deutlich wird, ist die gezeigte Rückblickspiegel-Anordnung als sogenannter "Hörnerspiegel" 1 ausgestaltet. Sein als Ganzes mit 2 bezeichneter Haltearm sitzt an der lediglich angedeuteten A-Säule 3 eines Omnibusses und ragt in Fahrtrichtung F nach vorne in den Sichtbereich der Windschutzscheibe. In seiner Grobform beschreibt der Hörnerspiegel 1 einen 90°-Bogen, dessen Radius in einer Größenordnung von bis zu einem Meter liegt.

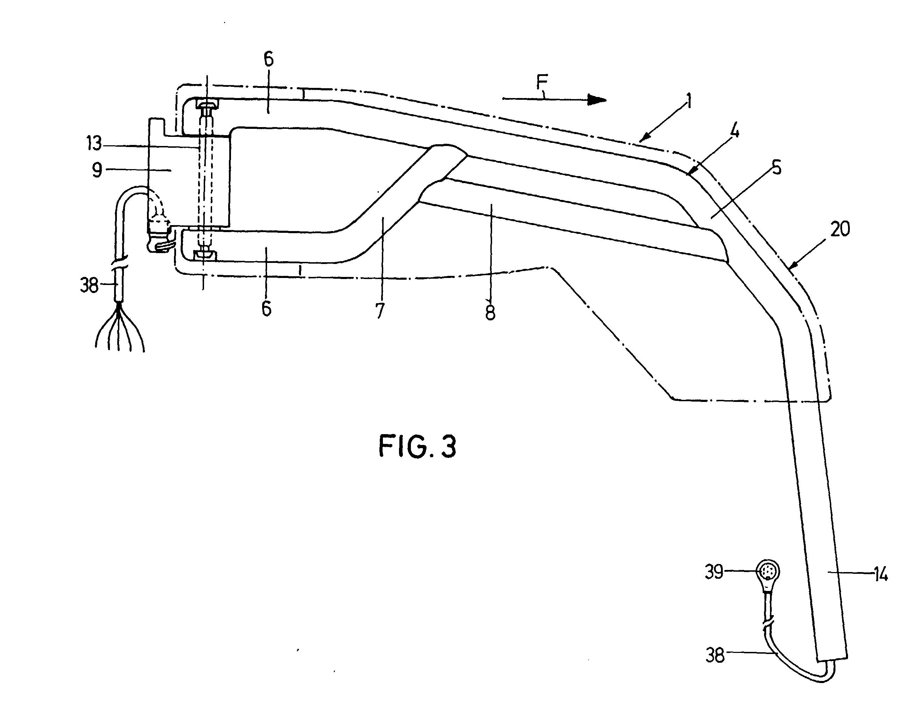

Kernelement des Hörnerspiegel 1 ist eine tragende Rohrstruktur 4, die in Fig. 1 und 2 lediglich im Bereich ihrer Enden bzw. im Schnitt erkennbar ist. Wie aus Fig. 3 deutlich wird, besteht diese Rohrstruktur 4 aus einer dem Grobverlauf des Hörnerspiegels 1 folgenden Hauptstrebe 5, an die am karosserieseitigen Ende 6 eine gabelförmig abzweigende Zusatzstrebe 7 angeschweißt ist. Letztere ist über eine Stützstrebe 8 zusätzlich an die Hauptstrebe angekoppelt, so daß die Rohrstruktur 4 eine sehr stabile Tragwerkskonstruktion bildet.

Die Rohrstruktur 4 ist schwenkbar um eine vertikale Achse V an einem Lagerbock 9 angelenkt, der an der A-Säule 3 des Omnibusses befestigt ist. Dabei sitzt der Lagerbock 9 zwischen den beiden Enden der Haupt- bzw. Zusatzstrebe 7, welche drei Bauteile in bekannter Weise unter Zwischenlage von Verrastscheiben 10, 11 und eines Tellerfederpaktes 12 zwischen den Streben 5, 6 und dem Lagerbock 9 durch eine Schraubbolzenkonstruktion 13 miteinander verbunden sind. Die obere Verrastscheibe 10 ist drehfest mit der Hauptstrebe 5 gekoppelt, während die untere Verrastscheibe 11 drehbar auf einer Ringschulter 40 im Lagerbock 9 sitzt. Die Verrastscheibe 11 ist durch einen von der Seite her in eine Gewindebohrung des Lagerbocks 9 einschraubbaren Gewindestift 41 in einer bestimmten Drehstellung festlegbar, wodurch die Grund-Winkelstellung des Hörnerspiegels 1 relativ zum Lagerbock 9 und damit zur Fahrzeug-Karosserie 3 definiert ist. Durch Lösen des Gewindestiftes 41, Verdrehen des Hörnerspiegels 1 mit den beiden Verrastscheiben 10, 11 und anschließendes Festlegen der unteren Verrastscheibe 11 mit Hilfe des Gewindestiftes 41 ist die Grund-Winkelstellung stufenlos einstellbar. Über das Rastprofil der beiden Verrastscheiben 10, 11 ist auch die sogenannte "Waschstellung" des Spiegels 1 definiert.

Durch die stufenlose Einstellbarkeit der Grund-Winkelstellung des Spiegels kann dieser jeweils ohne besondere bauliche Maßnahmen an unterschiedliche Bus-Typen angepaßt werden.

Wie aus Fig. 1 und 2 ferner hervorgeht, ist am freien Ende 14 der Hauptstrebe 5 der Rohrstruktur 4 ein Hauptspiegel 15 befestigt, der beispielsweise von einem üblichen Lkw-Spiegel gebildet sein kann. Als ein Beispiel von vielen Möglichkeiten ist hier ein Spiegel zu nennen, wie er in der DE 43 39 297 A1 gezeigt ist. Dieser Spiegel 15 weist im Inneren eine hier nicht näher dargestellte Tragplatte auf, die mittels eines Klemmschellenpaares an das freie Ende 14 der Hauptstrebe 5 angeschraubt wird. An dieser Tragplatte ist über ein Universalgelenk ein Schwenklagerteil gehalten, an dem austauschbar ein Spiegelscheibenhalter 16 mit darauf aufgeklebter Spiegelscheibe 17 befestigt ist. Die lösbare Verbindung zwischen Spiegelscheibenhalter 16 und Schwenklagerteil entspricht beispielsweise der sogenannten Klemmschlußverbindung, wie sie im europäischen Patent EP 0 609 508 B1 gezeigt ist. Das Gehäuse des Hauptspiegels 15 besteht aus einem Gehäusebasisteil 18 und einem darauf aufrastbaren Abdeckteil 19, das das freie Ende 14 der Hauptstrebe 5 und ihre Klemmschellenverbindung mit der zentralen Tragplatte des Hauptspiegels 15 verkleidet.

Wie aus Fig. 1 und 2 deutlich wird, ist die Rohrstruktur 4 zwischen ihrem karosserieseitigen Ende 6 und dem freien Ende 14 der Hauptstrebe 5 mit einem um sie herum geschäumten Formteil 20 aus Zwei-Komponenten-Hartschaum abgedeckt und - aufgrund der innigen Verbindung zwischen den Streben 5, 7, 8 und dem Formteil 20 - in ihrer tragenden Funktion zusätzlich stabilisiert. Das Formteil 20 kann einerseits unter Design- und aerodynamischen Gesichtspunkten frei gestaltet werden. Zusätzlich dient das Formteil 20 zur Anbringung von Zusatzspiegeln 21, 22 an der Innenseite seiner im wesentlichen bogenförmigen Verlaufs. Die Zusatzspiegel 21, 22 weisen jeweils stark konvex gewölbte Spiegelscheiben 23 auf und dienen zur Sicherheitsüberwachung von für den Busfahrer nicht einsehbaren Totwinkelbereichen. So ist über den unteren Zusatzspiegel 21 der beifahrerseitige Bereich zwischen Frontende des Busses und Vorderachse einsehbar, während der obere Zusatzspiegel 22 den Bereich direkt vor der Fahrzeugfront abdeckt.

Wie in Fig. 2 dargestellt ist, sitzen die beiden Zusatzspiegel 21, 22 in einer flachen Vertiefung 24 des Formteils 20. Die Spiegel 21, 22 weisen dabei wiederum eine Spiegeltragplatte 25 auf, auf die die jeweilige Spiegelscheibe 23 geklebt ist. Die Spiegeltragplatten 25 sind jeweils mit Lagerpfannenkörpern 26 versehen, die auf entsprechende Kugelköpfe 27 im Bereich der Vertiefung 24 aufgerastet sind. Die Kugelköpfe 27 dienen mit den Lagerpfannenkörpern 26 als manuell betätigbarer Verstellmechanismus. Ihre Füße 28 sind direkt über nicht näher dargestellte Schrauben im Boden 29 der Formteil-Vertiefung 24 verankert. Der in Fig. 2 gezeigte untere Zusatzspiegel 21 ist um die Verbindungsachse VA zwischen den beiden Kugelköpfen 27 schwenkbar. Da die Spiegeltragplatten 25 mit ihren Lagerpfannenkörpern 26 von den Kugelköpfen 27 abgezogen werden können, sind die Zusatzspiegel 21, 22 leicht austauschbar.

Wie in Fig. 1 und 2 nicht eigens dargestellt ist, können statt des manuellen Verstellmechanismusses gemäß Fig. 2 auch eine elektromotorische Verstellung vorgesehen sein. Dazu kann ein übliches kompaktes Verstellmodul in der Vertiefung 24 angeordnet werden. Über die Rohrstruktur 4 und durch das Formteil 20 können die Steuerkabel für diesen Verstellantrieb genauso geführt werden, wie entsprechende Kabel für eine Beheizung der Zusatzspiegel 21, 22.

Wie ferner aus Fig. 2 hervorgeht, ist das Formteil 20 mit einem zweiteiligen Einlegekern versehen, dessen beide Hälften 31, 32 die Haupt- und Stützstrebe 5, 8 durch entsprechend eingeformte, halbzylindrische Ausnehmungen 33 formschlüssig umschließen. Der Einlegekern 30 besteht aus einem leichteren Material wie die verbleibende Schale 34 des Formteils 20, die beispielsweise aus einem Polyurethan-Hartschaum gefertigt ist. Dieses Material bildet eine glatte Oberfläche aus, die lackierbar ist.

Abschließend ist zu Fig. 1 zu ergänzen, daß das karosserieseitige Ende 6 der Haupt- und Zusatzstrebe 5, 7 zusammen mit dem Lagerbock 9 durch einen aufgesetzten Faltenbalg 35 abgedeckt ist. Dieser ist mit seinem zum Formteil 20 weisenden Rand 36 in eine am karosserieseitigen Ende des Formteils 20 umlaufende Nut 37 eingeschnappt.

In Fig. 1 und 3 ist ferner ein mehradriges Kabel 38 dargestellt, über das die elektromotorischen Verstellantriebe des Hauptspiegels 15 gesteuert sowie dessen Spiegelheizung mit Energie versorgt werden. Das Kabel 38 ist über den Lagerbock 9 in die Hauptstrebe 5 eingeführt. Am spiegelseitigen Ende des Kabels 38 ist ein Stecker 39 angebracht, der mit einer entsprechenden Buchse am Hauptspiegel 15 zu verbinden ist.

## Patentansprüche

1. Rückblickspiegel-Anordnung für Nutzfahrzeuge, insbesondere für Omnibusse, mit
- einem an einer Fahrzeug-Karosserie (3) anbringbaren Haltearm (2) mit einer tragenden Rohrstruktur (4) als Kernelement,
- einem am freien Ende(14) der Rohrstruktur (4) befestigten Hauptspiegel (15) mit eigenem Gehäuse (18, 19) und einer darin vorzugsweise motorisch verstellbar gelagerten Spiegelscheibe (17), und
- einem die Rohrstruktur (4) zwischen ihrem karosserieseitigen Ende (6) und dem Hauptspiegel (15) umgebenden Formteil (20) zur Abdeckung der Rohrstruktur (4) und vorzugsweise zur Halterung von Zusatzspiegeln (21, 22),
**dadurch gekennzeichnet, daß** das Formteil (20) ein um die Rohrstruktur (4) geschäumtes Formteil insbesondere aus 2-Komponenten-Hartschaum ist.

2. Rückblickspiegel-Anordnung nach Anspruch 1, **dadurch gekennzeichnet, daß** das Formteil (20) mindestens eine Lagerausnehmung (24) zur Aufnahme von einem oder mehreren Zusatzspiegeln (21, 22) aufweist.

3. Rückblickspiegel-Anordnung nach Anspruch 1 oder 2, **dadurch gekennzeichnet, daß** der oder die Zusatzspiegel (21, 22) jeweils über einen Verstellmechanismus (26, 27) am Formteil (20) gelagert sind.

4. Rückblickspiegel-Anordnung nach einem der Ansprüche 1 bis 3, **dadurch gekennzeichnet, daß** der/die Zusatzspiegel (21, 22) oder ihr Verstellmechanismus (26, 27) mit dem Formteil (20) direkt verschraubt sind.

5. Rückblickspiegel-Anordnung nach einem der Ansprüche 1 bis 4, **dadurch gekennzeichnet, daß** der/die Zusatzspiegel elektromotorisch verstellbar, auswechselbar und/oder heizbar sind.

6. Rückblickspiegel-Anordnung nach Anspruch 1, **dadurch gekennzeichnet, daß** in das geschäumte Formteil (20) mindestens ein Einlegekern (30) zur Gewichtsreduzierung eingeschäumt ist.

7. Rückblickspiegel-Anordnung nach Anspruch 6, **dadurch gekennzeichnet, daß** der mindestens eine Einlegekern (30) dicht um die Rohrstreben (5, 7, 8) der Rohrstruktur (4) anliegt.

8. Rückblickspiegel-Anordnung nach einem der Ansprüche 1 bis 7, **dadurch gekennzeichnet, daß** die Rohrstruktur (4) an ihrem karosserieseitigen Ende (6) zwei Tragstreben (5, 7) aufweist, die zwischen sich einen Lagerbock (9) zur Befestigung der Rückblickspiegel-Anordnung an der Fahrzeug-Karosserie (3) einschließen.

9. Rückblickspiegel-Anordnung nach einem der Ansprüche 1 bis 8, **dadurch gekennzeichnet, daß** die Rohrstruktur (4) im Bereich des Formteils (20) eine Tragwerkskonstruktion aus mehreren Rohrstreben (5, 7, 8) bildet.

10. Rückblickspiegel-Anordnung nach einem der Ansprüche 1 bis 9, **dadurch gekennzeichnet, daß** die Rohrstruktur (4) zu ihrem freien Ende (14) hin in eine einzelne Stangenstrebe (5) zur Befestigung des Hauptspiegels (15) mündet.

11. Rückblickspiegel-Anordnung nach Anspruch 10, **dadurch gekennzeichnet, daß** die Stangenstrebe (5) in das Gehäuse (18, 19) des Hauptspiegels (15) hineinragt und dort mit dem Hauptspiegel (15) verbunden ist.

12. Rückblickspiegel-Anordnung nach einem der Ansprüche 1 bis 11, **dadurch gekennzeichnet, daß** die Grund-Winkelstellung des Haltearms (2) gegenüber der Fahrzeug-Karosserie (3) und insbesondere dem Lagerbock (9) stufenlos einstellbar ist.

## Claims

1. A rear view mirror arrangement for commercial vehicles, in particular for buses with:
- a support arm (2) capable of attachment to a vehicle chassis (3) having a carrying tubular structure (4) as a core element,
- a principal mirror (15) with its own housing (18, 19) affixed to the free end (14) of the tubular structure (4) preferably having mounted an integrally, motorized, adjustable mirror pane (17), and
- a molded component (20) which encapsulates the tubular structure (4) between the chassis proximal end (6) and the principal mirror (15) for the covering of said tubular structure (4) and advantageously for the holding of auxiliary mirrors (21, 22), characterized in that the molded component (20) is comprised of a foamed molded component encapsulating the tubular structure (4) which molded component (20) is especially composed of a 2-component hard foam.

2. A rear view mirror arrangement according to claim 1, characterized in that the molded component (20) comprises at least a bearing recess (24) for the receipt of one or more auxiliary mirrors (21, 22).

3. A rear view mirror arrangement according to claims 1 or 2, characterized in that the/those auxiliary mirror(s) (21, 22) are installed via an adjustment mechanism (26, 27) on the molded component (20).

4. A rear view mirror arrangement according to one of the claims 1 to 3, characterized in that the auxiliary mirror(s) (21, 22) or its/their adjustment mechanism (26, 27) are directly threadedly engaged with the molded component (20).

5. A rear view mirror arrangement according to one of the claims 1 to 4, characterized in that the auxiliary mirror(s) are adjustable by an electric motor, are exchangeable and/or are heatable.

6. A rear view mirror arrangement according to claim 1, characterized in that incorporated within the foamed molded component (20) is at least one insert core (30) for a reduction in weight.

7. A rear view mirror arrangement according to claim 6, characterized in that the at least one insert core (30) lies closely about the tubular struts (5, 7, 8) of the tubular structure (4).

8. A rear view mirror arrangement according to one of the claims 1 to 7, characterized in that the tubular structure (4) exhibits on its chassis proximal end (6) two carrying struts (5, 7), which enclose between them an anchor block (9) for the affixing of the rear view mirror arrangement onto the vehicle chassis (3).

9. A rear view mirror arrangement according to one of the claims 1 to 8, characterized in that the tubular structure (4) in the neighborhood of the molded component (20) forms a supporting construction of a plurality of tubular struts (5, 7, 8).

10. A rear view mirror arrangement according to one of the claims 1 to 9, characterized in that the tubular structure (4) at its free end (14) terminates in a rod-like strut (5) for the fastening of the principal mirror (15).

11. A rear view mirror arrangement according to claim 10, characterized in that the rod-like strut (5) penetrates into the housing (18, 19) of the principal mirror (15) and there is connected to said principal mirror (15).

12. A rear view mirror arrangement according to one of the claims 1 to 11, characterized in that the basic angular positioning of the support arm (2) is continuously adjustable in relation to the vehicle chassis (3) and especially in relation to the anchor block (9).

## Revendications

1. Dispositif de rétroviseur pour véhicules utilitaires, notamment pour autobus, comportant
- un bras de retenue (2) pouvant être monté sur une carrosserie (3) d'un véhicule et possédant, comme élément formant noyau, une structure tubulaire de support (4),
- un miroir principal (15) qui est fixé sur l'extrémité libre (14) de la structure tubulaire (4) et comporte un boîtier propre (18, 19) et un réflecteur (17) monté dans le boîtier de préférence de manière à être réglable de façon motorisée, et
- une pièce moulée (20) qui entoure la structure tubulaire (4) entre l'extrémité (6) de cette structure, située côté carrosserie, et le miroir principal (15) et sert à recouvrir la structure tubulaire (4) et de préférence à retenir des miroirs supplémentaires (21,22),
caractérisé en ce que la pièce moulée (20) est une pièce moulée formée de mousse entourant la structure tubulaire (4) et constituée notamment par une mousse dure à 2 constituants.

2. Dispositif de rétroviseur selon la revendication 1, caractérisé en ce que la pièce moulée (20) comporte au moins un évidement de support (24) servant à recevoir un ou plusieurs miroirs supplémentaires (21, 22).

3. Dispositif de rétroviseur selon l'une des revendications 1 ou 2, caractérisé en ce que le ou les miroirs supplémentaires (21, 22) sont montés sur la pièce moulée (20) à l'aide d'un mécanisme respectif de réglage (26, 27).

4. Dispositif de rétroviseur selon l'une des revendications 1 à 3, caractérisé en ce que le ou les miroirs supplémentaires (21, 22) ou leur mécanisme de réglage (26, 27) sont vissés directement sur la pièce moulée (20).

5. Dispositif de rétroviseur selon l'une des revendications 1 à 4, caractérisé en ce que le ou les miroirs supplémentaires peuvent être réglés à l'aide d'un moteur électrique, remplacés et/ou chauffés.

6. Dispositif de rétroviseur selon la revendication 1, caractérisé en ce que pour réduire le poids au moins un noyau d'insertion (30) est formé de mousse dans la pièce moulée en mousse (20).

7. Dispositif de rétroviseur selon la revendication 6, caractérisé en ce que le au moins un noyau d'insertion (30) s'applique d'une manière étanche autour des entretoises tubulaires (5, 7, 8) de la structure tubulaire (4).

8. Dispositif de rétroviseur selon l'une des revendications 1 à 7, caractérisé en ce que la structure tubulaire (4) porte, sur son extrémité (6) située côté carrosserie, deux entretoises de support (5, 7), qui enserrent entre elles un bloc-palier (9) servant à fixer le dispositif de rétroviseur sur la carrosserie (3) du véhicule.

9. Dispositif de rétroviseur selon l'une des revendications 1 à 8, caractérisé en ce que la structure tubulaire (4) forme, au voisinage de la pièce moulée (20), une structure de support formée de plusieurs entretoises tubulaires (5, 7, 8).

10. Dispositif de rétroviseur selon l'une des revendications 1 à 9, caractérisé en ce que la structure tubulaire (4) se prolonge, en direction de son extrémité libre (14), dans une entretoise isolée en forme de barre (5) servant à fixer le miroir principal (15).

11. Dispositif de rétroviseur selon la revendication 10, caractérisé en ce que l'entretoise en forme de barre (5) pénètre dans le boîtier (18, 19) du miroir principal (15) et est reliée, en cet endroit, au miroir principal (15).

12. Dispositif de rétroviseur selon l'une des revendications 1 à 11, caractérisé en ce que le réglage angulaire de base du bras de retenue (2) par rapport à la carrosserie (3) du véhicule et notamment par rapport au bloc-palier (9) est réglable progressivement.
